# EUROPEAN PATENT APPLICATION

(11) **EP 2 437 184 A1**
(43) Date of publication of application: **04.04.2012**
(21) Application number: 11162383.1
(22) Date of filing: 14.04.2011
(51) Int. Cl.: G06F 17/30

(54) **Host apparatus and method of displaying content by the same**

(30) Priority: 15.09.2010 KR 20100090421
(71) Applicant: SAMSUNG ELECTRONICS CO., LTD., Suwon-si, Gyeonggi-do (KR)
(72) Inventor: Jung, Hee-chul, Gyeonggi-do (KR); Kang, Hyung-jong, Seoul (KR); Park, In-chang, Seoul (KR); Lee, Byeong-jin, Gyeonggi-do (KR); SONG, Mi-sook, Gyeonggi-do (KR)
(74) Representative: Hewett, Jonathan Michael Richard

(57) **Abstract**

Disclosed are a host apparatus and a method of displaying content by the host apparatus, the method including: executing a browser and displaying a page including at least one content; selecting a content clipping menu in the browser; displaying a scrap board in one portion of the browser through a plug-in; selecting the at least one content from the displayed page; clipping and displaying the selected content on a scrap board; storing the clipped content as clipped data in a predetermined format; displaying the stored clipped data; and updating the displayed clipped data with data corresponding to a current uniform resource locator (URL).

## Description

The present invention relates to a host apparatus and a method of displaying content by the same, and more particularly, to a host apparatus which clips and displays a web content, and a method of displaying a web content by the same.

As various web environments are provided with supply of the ultra-high-speed Internet and the advent of the generation of Web 3.0, users access much information through webpages.

In the various web environments, the users collect and store a great deal of information through webpages and use the information via printing, processing, and the like.

In order to store and utilize a webpage, a method of capturing, that is, clipping, and storing a region of the webpage is used.

However, the above conventional method of storing web clipped data stores the clipped region of the webpage as an image format, and thus the data may be used only as a still image corresponding to a clipped time

That is, when contents in the clipped region are information changing in real time, such as information about news, weather, traffics, and the like, the stored web clipped data includes only information at a past clipped point in time, and thus the users may not be provided with information at a current point in time.

Thus, the users repeatedly visit corresponding webpages to identify information in real time, and accordingly the stored web clipped data is less useful.

Accordingly, one or more exemplary embodiments provide a host apparatus which provides users with stored web clipped data updated in real time, so that the users need not repeatedly visit webpages to identify information in real time and so that the web clipped data can be widely used, and a method of displaying a web content by the same.

Further, one or more exemplary embodiments provide a host apparatus which displays web clipped data together with an uniform resource locator (URL), a clipped time, and an updated time of a corresponding webpage, so that users may conveniently identify a source and time information on the web clipped data at once, and a method of displaying a web content by the same.

In addition, one or more exemplary embodiments provide a host apparatus which stores and updates a plurality of web contents in one web clipped data to provide users with contents of a plurality of webpages using the one web clipped data, and enables the users to selectively update an object among the plurality of web contents to improve users' convenience, and a method of displaying a web content by the same.

The foregoing and/or other aspects may be achieved by providing a method of displaying a web content by a host apparatus, the method including: executing a web browser and displaying a webpage including at least one web content; selecting a web content clipping menu in the web browser; displaying a scrap board in one portion of the web browser through a plug-in; selecting the at least one web content from the displayed webpage; clipping and displaying the selected web content on a scrap board; storing the clipped web content as web clipped data in a predetermined format; displaying the stored web clipped data; and updating the displayed web clipped data with data corresponding to a current uniform resource locator (URL).

The displaying the web clipped data may include displaying the URL and a clipped time of the clipped web content.

The updating the web clipped data may include updating the URL and the clipped time of the clipped web content.

The updating web clipped data may include: accessing a corresponding webpage using the URL of the clipped web content; and parsing hypertext markup language (HTML) data collected from the accessed webpage.

The updating the web clipped data may include: storing the parsed data as a virtual image; comparing the stored virtual image with the stored web clipped data; and analyzing a clipped image updated from the stored web clipped data based on a comparison result.

The updating the web clipped data may include: selecting at least one web content to update among the clipped web content; and updating the selected web content.

The storing as the web clipped data may store the web clipped data in a compressed web to print (W2P) format file.

The W2P file may include a file to manage at least one of information including a coordinate, a width, a height, a scale, a state, the URL, a title of an original webpage, and a clipped time of a clipped region from the webpage.

The updating the web clipped data may include: selecting a refresh of the stored web clipped data; loading the stored web clipped data; and updating the loaded web clipped data.

The foregoing and/or other aspects may be achieved by providing a method of displaying a web content by a host apparatus which stores web clipped data including at least one clipped web content, the method including: selecting pre-stored web clipped data; loading the selected web clipped data; and updating the loaded web clipped data with data corresponding to a current uniform resource locator (URL), the pre-stored web clipped data including the URL and a clipped time of the clipped web content, and the updating the web clipped data including updating the URL and the clipped time of the clipped web content.

The updating the web clipped data may includes: accessing a corresponding webpage using the URL of the clipped web content; parsing hypertext markup language (HTML) data collected from the accessed webpage; storing the accessed webpage as a virtual image based on the parsed data; comparing the stored virtual image with the stored web clipped data; and analyzing a clipped image updated from the stored web clipped data based on a comparison result.

The foregoing and/or other aspects may be achieved by providing a host apparatus including: a communication unit which performs data communication with an outside; a display unit which displays a webpage including at least one web content in one portion of the web browser through a plug-in according to execution of a web browser; a user input unit which executes the web browser, selects a web content clipping menu in the web browser, selects the at least one web content from the displayed webpage and clips the selected web content on a scrap board displayed in one portion of the webpage; a storage unit which stores the clipped web content as web clipped data in a predetermined format; and a controller which controls the display unit to display the stored web clipped data, and to control the communication unit to update the stored web clipped data with data corresponding to a current uniform resource locator (URL) when a selection to refresh the stored web clipped data is input through the user input unit.

The display unit may further display the URL and a clipped time of the clipped web content.

The controller may further update the URL and the clipped time of the clipped web content.

The controller may control the communication unit to access a corresponding webpage using the URL of the clipped web content, and parse hypertext markup language (HTML) data collected from the accessed webpage to update the web clipped data.

The controller may store the accessed webpage in the storage unit as temporary data based on the parsed data, compare the stored temporary data with the stored web clipped data, and analyze a clipped image updated from the storage web clipped data based on a comparison result.

The user input unit may select at least one web content to update among the clipped web content, and the controller updates the selected web content.

The storage unit may store the web clipped data in a compressed web to print (W2P) format file.

The W2P file may include a file to manage at least one of information including a coordinate, a width, a height, a scale, a state, the URL, a title of an original webpage, and a clipped time of a clipped region from the webpage.

The controller may load the web clipped data from the storage unit corresponding to a selection to refresh the web clipped data, and update the loaded web clipped data.

As described above, according to a host apparatus and a method of displaying a web content by the same of exemplary embodiments, users may be provided with stored web clipped data updated in real time, so that the users may not repeatedly visit webpages to identify information in real time and the web clipped data is highly used.

Moreover, web clipped data may be displayed together with a URL, a clipped time, and an updated time of a corresponding webpage, so that users may conveniently identify a source and time information on the web clipped data at once.

Also, a plurality of web contents may be stored and updated in one web clipped data to provide users with contents of a plurality of webpages using the one web clipped data, and the users may selectively update an object among the plurality of web contents to improve users' convenience.

The above and/or other aspects will become apparent and more readily appreciated from the following description of the exemplary embodiments, taken in conjunction with the accompanying drawings, in which:
FIG.1 is a block diagram illustrating a configuration of a host apparatus according to an exemplary embodiment.
FIG. 2 illustrates a webpage screen according to an exemplary embodiment.
FIG. 3 illustrates a structure of web clipped data according to an exemplary embodiment.
FIG. 4 illustrates an example of a layout file according to an exemplary embodiment.
FIGS. 5 and 6 illustrate an entire screen displaying web clipped data according to an exemplary embodiment.
FIGS. 7 and 8 respectively illustrate a webpage screen and an entire screen according to another exemplary embodiment.
FIGS. 9A and 9B are a flowchart illustrating a method of displaying a web content by a host apparatus according to an exemplary embodiment.
FIG. 10 is a flowchart illustrating a method of displaying a web content by a host apparatus according to another exemplary embodiment.

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

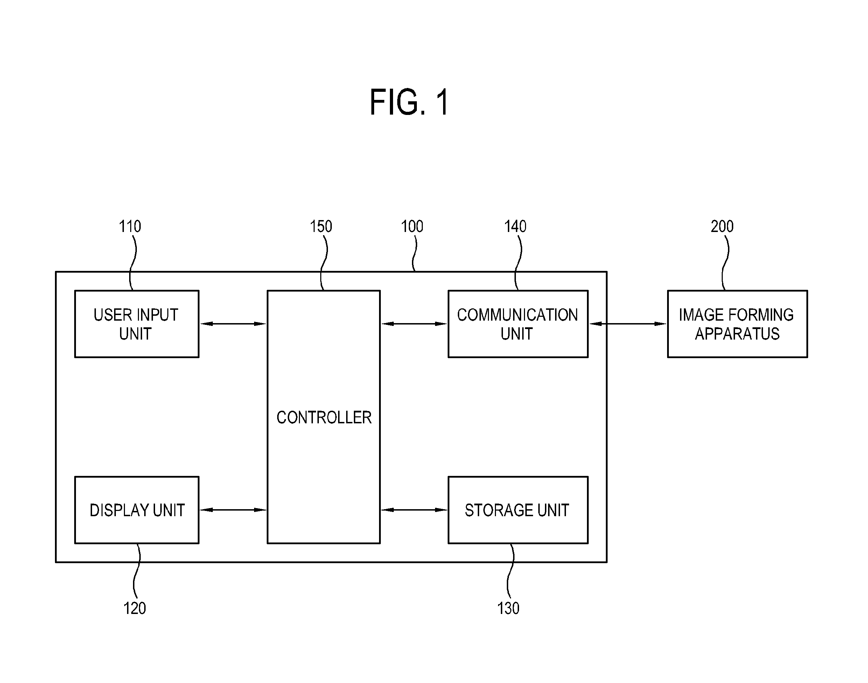

FIG.1 is a block diagram illustrating a configuration of a host apparatus 100 according to an exemplary embodiment.

The host apparatus 100, configured as a personal computer (PC), is connected to an image forming apparatus 200 via a wire-based or wireless network or via a communication interface, such as a universal serial bus (USB), and performs data communication with at least one image forming apparatus 200. The image forming apparatus 200 may be configured as a printer, a copy machine, a fax machine, a multi-functional device having at least two functions, and the like.

As shown in FIG. 1, the host apparatus 100 includes a user input unit 110, a display unit 120, a storage unit 130, a communication unit 140, and a controller 150.

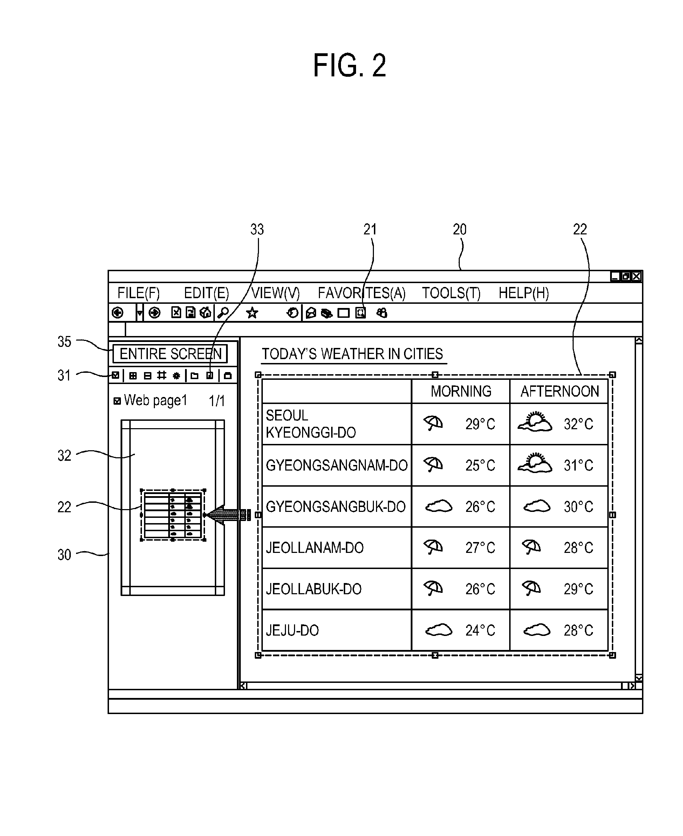

The user input unit 110 receives an input of various selections from a user. In detail, the user may select a region 22 (as shown) in FIG. 2, including at least one content on a webpage screen 20 in FIG. 2 and edit web clipped data 32 in FIG. 2 including the region 22 of the content using the user input unit 110. Further, the user may input instructions, such as saving, printing, and the like, for the edited web clipped data 32 through the user input unit 110.

The user input unit 110 may include a keyboard, a mouse, a touch panel, and/or the like, provided as an input device of the host apparatus 100, and may include a graphic user interface (GUI) generated by implementation of a driver or an application and displayed on the display unit 120 so that the user makes a selection. For example, the user input unit 110 of the embodiment includes a webpage menu button 21 which is displayed in a toolbar of the webpage screen 20, a menu item button 31 and an entire screen button 35 of a scrap board 30, a menu item button 41 of an entire screen 40 with respect to the scrap board, and the like, as shown in FIGS. 2 and 5 to 8.

The display unit 120 may display the webpage screen 20 including the scrap board 30 or a clip board to the user, as an example of the embodiment. However, it is not limited thereto. The webpage screens are an example of the embodiment. Therefore, any different kinds of screens are also possible.

The display unit 120 may include a liquid crystal display (LCD) and a driver (not shown) to drive the LCD.

FIG. 2 illustrates a webpage screen 20 according to an exemplary embodiment.

As shown in FIG. 2, when the user selects a web content clipping menu button 21 in the toolbar of the webpage screen 20 using the user input unit 110 to implement a web content clipping mode, the display unit 120 displays the scrap board 30 in a region of a web browser, for example, a left region, through a plug-in.

In the present embodiment, the scrap board 30 is formed in a split portion of a screen on the display unit 120 displaying a webpage and may be generated to store web clipped data on the webpage screen 20 without a new window being generated by an additional application or program. The scrap board 30 may be hidden by a user's selection.

The display unit 120 may display, for the user, that the web content clipping mode is selected by changing a shape of a mouse pointer to '+.'

When at least one content region 22 is selected on the webpage screen 20 through the user input unit 110, the display unit 120 may display the selected content region 22 to be distinguished from a background region of the webpage screen 20 other than the selected content region 22.

In detail, the user may select the content region 22 by clicking a spot on the webpage screen 20 and dragging the spot to a predetermined position using a mouse or the like in the web content clipping mode. Here, the selected content region 22 is displayed, being enclosed by a boundary of a dotted line or the like for the user to recognize. Accordingly, the user may identify the selected content region 22 and correct the selected content region 22 using the mouse.

Referring to FIG. 2, the user may select and transfer the selected content region 22 to the scrap board 30 through a drag and drop on the webpage screen 20.

Further, while the content region can be selected via dragging with a mouse, the user may instead select its transfer to the scrap board 30 via a context menu displayed by clicking a right button of the mouse, thereby transferring the selected content region 22 to the scrap board 30.

Here, the content region 22 selected by the user may be clipped in a hypertext markup language (HTML) object unit and transferred to the scrap board 30.

As shown in FIG. 2, the clipped content region 22 is added to a page region 32 of the scrap board 30.

As shown in FIG. 2, the scrap board 30 includes the page region 32 displaying web clipped data including at least one content region 22, and a menu region 31 including at least one menu item.

The menu region 31 may include at least one button among buttons corresponding to a checkbox, add page, delete page, margin setup, load, save, and print. The menu region 31 may further include the entire screen button 35 selected to display the web clipped data on the entire screen.

The user selects each button in the menu region 31 to edit the web clipped data including the at least one content region 22. Here, the display unit 120 may display a margin of a print page of the web clipped data based on a user's selection, and accordingly the user may conveniently perform editing.

The web clipped data including the at least one content region 22 may be stored as a file in a predetermined format in the storage unit 130. Here, the web clipped data stored in the storage unit 130 is a compressed web to print (W2P) format file having a stack structure.

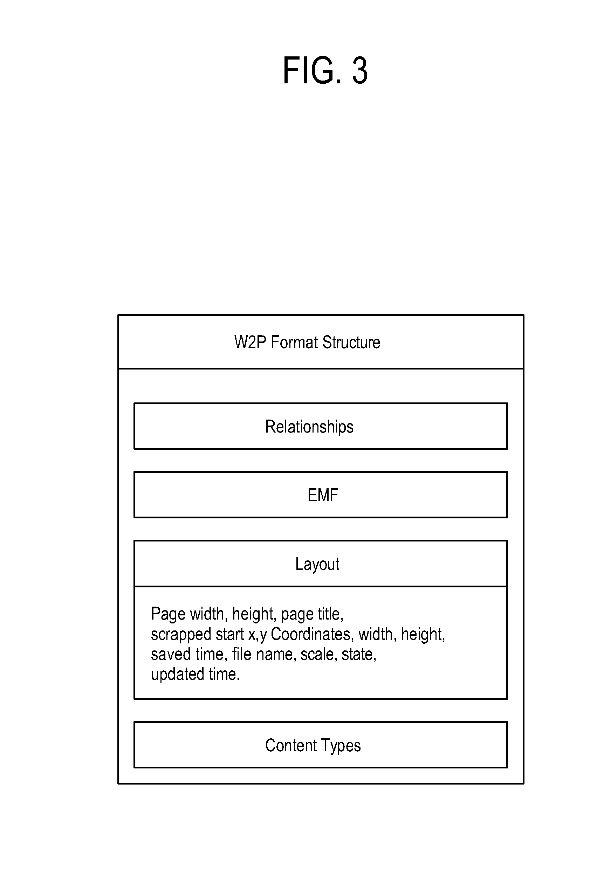

FIG. 3 illustrates a structure of web clipped data according to an exemplary embodiment.

As shown in FIG. 3, a W2P format file may include a plurality of files including a relationship file, an enhanced meta file (EMF), a layout file, and a content type file. However, it is not limited thereto.

Here, the layout file has an extensible markup language (XML) format, layout.xml, and includes various types of information used to refresh the web clipped data.

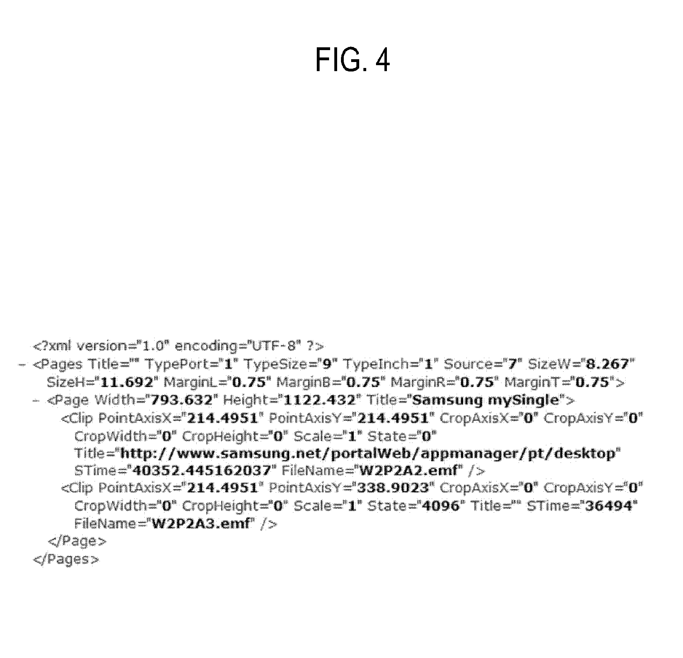

FIG. 4 illustrates an example of a layout file according to an exemplary embodiment.

As shown in FIGS. 3 and 4, the layout file, which is layout.xml, saves and manages information such as coordinates including an x coordinate and a y coordinate, a width, a height, a scale, a state, an uniform resource locator (URL), a title of an original webpage, and a clipped time including a saved time and an updated time of the clipped region 22 from the webpage with respect to the web clipped data.

When the web clipped data is saved in a W2P file, the user may read out the saved W2P file through a load button of the menu region 31, and the display unit 120 may update and display a loaded web clipped data file in real time to the user.

The storage unit 130 stores the web clipped data in the W2P format, and the stored web clipped data is updated in real time corresponding to a refresh instruction by the user. The storage unit 130 includes a built-in storage medium, such as a hard disk drive (HDD) provided in the host apparatus 100, or an external or portable storage medium, such as a USB memory and a memory card including a memory stick, a CompactFlash (CF) card, and a MultiMediaCard (MMC). However, it is understood that it is not limited thereto.

The communication unit 140 performs data communication with an external device. The communication unit 140 may include a wire-based or wireless communication module connected to the image forming apparatus 200 through a network based on a protocol, or a user interface, such as a USB.

In detail, the communication unit 140 accesses the original webpage of the web clipped data corresponding to the refresh instruction on the web clipped data stored in the storage unit 130 and collects HTML data from the accessed webpage. The collected HTML data is stored as a temporary file in the storage unit 130 and is used to update the web clipped data.

Here, the communication unit 140 communicates with at least one image forming apparatus 200 to transmit a print instruction on the web clipped data to the image forming apparatus 200.

For example, when a print instruction on the web clipped data including at least one web content is received, the communication unit 140 transmits print data corresponding to the web clipped data to the image forming apparatus 200. The image forming apparatus 200 receives the print data from the host apparatus 100 and performs a printing based on the received print data.

The controller 150 may control the host apparatus 100 overall.

In detail, when an instruction to select a web content clipping mode is issued through the user input unit 110 while a webpage including at least one content is displayed on the display unit 120 as shown in FIG. 2, the controller 150 controls the display unit 120 to display the scrap board 30 on a region of the webpage screen 20.

When an instruction to clip the at least one web content 22 from the webpage screen 20 is received through the user input unit 110, the controller 150 controls the display unit 120 to display the selected web content 22 on the scrap board 30. Here, the controller 150 receives a selection of whether to display information on the web content 22, such as a URL and a clipped time, managed by layout.xml from the user through the user input unit 110, and controls the display unit 120 to display the information in a region for the web clipped data based on the selection.

The controller 150 stores the web clipped data including the web content 22 displayed in the scrap board 30 in the storage unit 130. Here, the stored web clipped data may be a W2P format file including layout.xml of FIGS. 3 and 4.

The controller 150 may control the display unit 120 to display the web clipped data in an entire screen based on a user's selection. For example, the user clicks the entire screen button 35 in the scrap board 30 of FIG. 2 to select an entire screen view of the web clipped data.

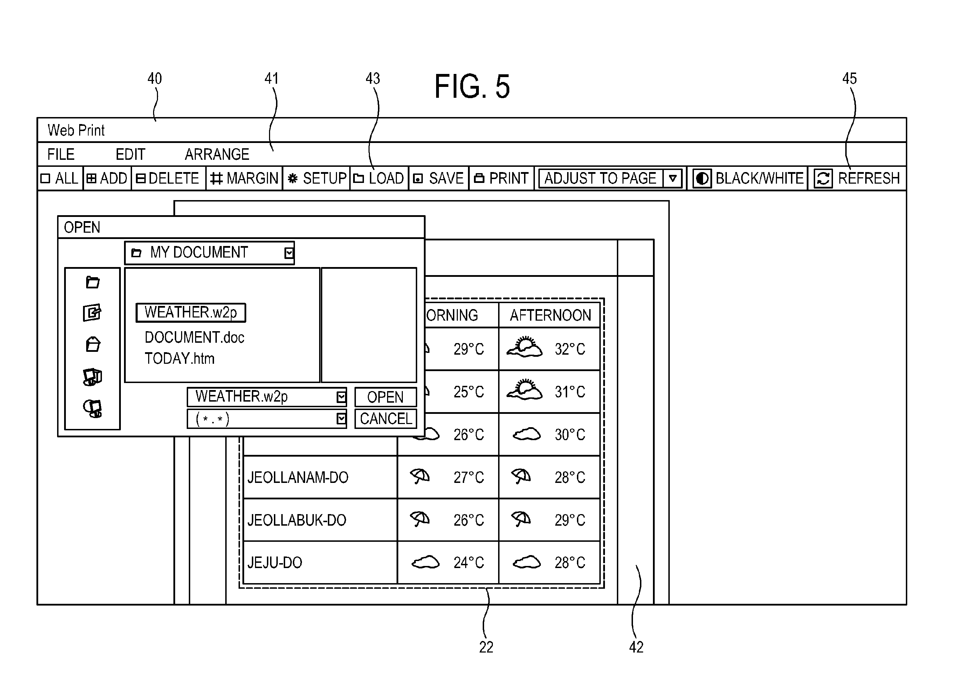

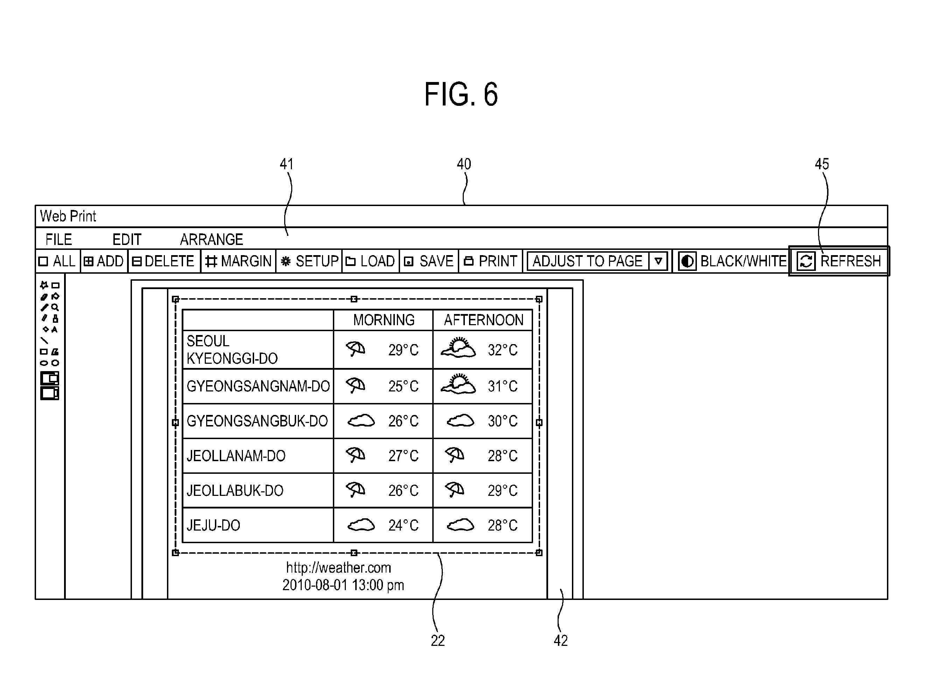

FIGS. 5 and 6 illustrate an entire screen 40 displaying web clipped data according to an exemplary embodiment.

As shown in FIGS. 5 and 6, the entire screen 40 includes a menu item toolbar 41 including at least one button for a user to make a selection, and a page region 42 displaying a web content 22 included in web clipped data. The menu item toolbar 41 includes at least one button among buttons corresponding to select all, add page, delete page, margin setup, load, save, print, black and white, refresh, and the like.

Referring to FIG. 5, the user may select a load button 43 in the menu item toolbar 41 to load web clipped data pre-stored in the storage unit 130. Here, the loaded web clipped data has a W2P format and is displayed along with a URL and a clipped time of a clipped web content.

Referring to FIG. 6, the user may select a refresh button 45 in the menu item toolbar 41 to select an update of the stored web clipped data to displayed web clipped data in real time. Here, the user may select an F5 key of a keyboard (not shown) corresponding to a refresh to refresh the web clipped data.

When an instruction to refresh the web clipped data is issued from the user, the controller 150 controls the communication unit 140 to update the stored web clipped data with data corresponding to a current URL.

In detail, the controller 150 controls the communication unit 140 to access a corresponding webpage using a URL of a clipped web content and to collect HTML data from the accessed webpage.

The controller 150 updates a clipped time of the web clipped data to a current time and updates URL information. Here, the update refers to updating a layout file, layout.xml, which may be performed when there is a change in the URL information.

Here, the clipped time is a data element to record an update history log. Whenever the user performs updating, a time and updated data information are stored as separate a log file, and the log file is used to backtrack the web clipped data.

The controller 150 parses and stores the HTML data collected through the communication unit 140. Here, the parsed HTML information is stored as a virtual image with respect to an entire webpage, and the stored virtual image becomes a type of EMF used as raw data in a W2P format.

The controller 150 compares the parsed HTML data with the layout file, layout.xml, of the pre-stored web clipped data.

Based on a comparison result, the controller 150 analyzes a clipped image updated from the pre-stored web clipped data. Here, the controller 150 may designate the clipped image using coordinates including a starting point of an x coordinate and a y coordinate, a width, and a height.

The controller 150 stores information about the clipped image, analyzed above, as a temporary file in a temporary buffer in a storage unit 130, for example.

The controller 150 records the stored temporary file in the layout file, layout.xml, to update the web clipped data in the storage unit 130 and controls the display unit 120 to display the updated web clipped data.

Here, the updated web clipped data corresponding to a current URL is displayed along with a URL and a clipped time which are finally updated.

When the user selects loading the pre-stored web clipped data, the controller 150 simultaneously loads and updates the web clipped data regardless of selecting the refresh button 45 or a renew button.

The updating of the web clipped data described above is performed in a background without an additional UI displayed on the display unit 120, and thus the user may update and identify the web clipped data in real time without an identification process.

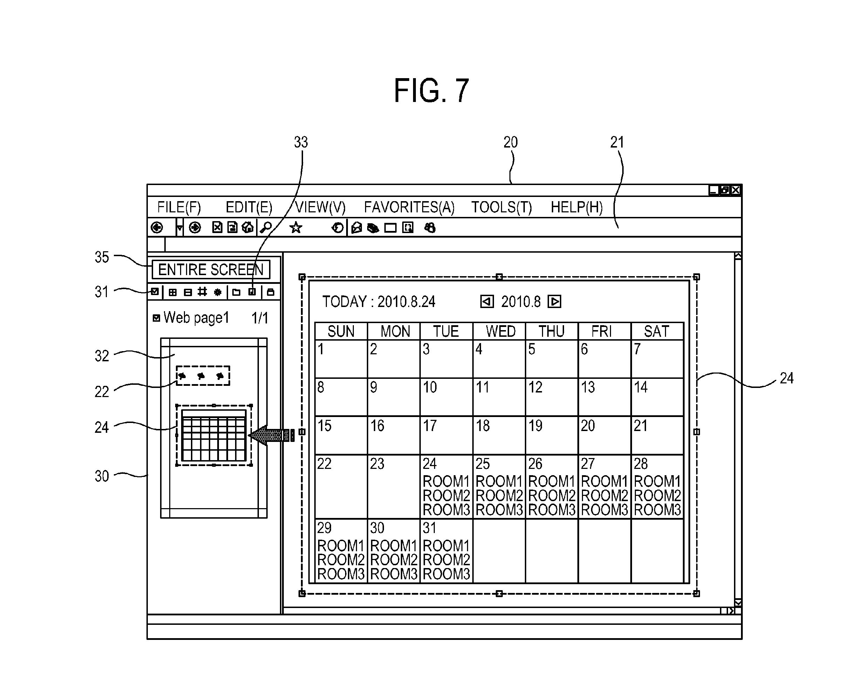

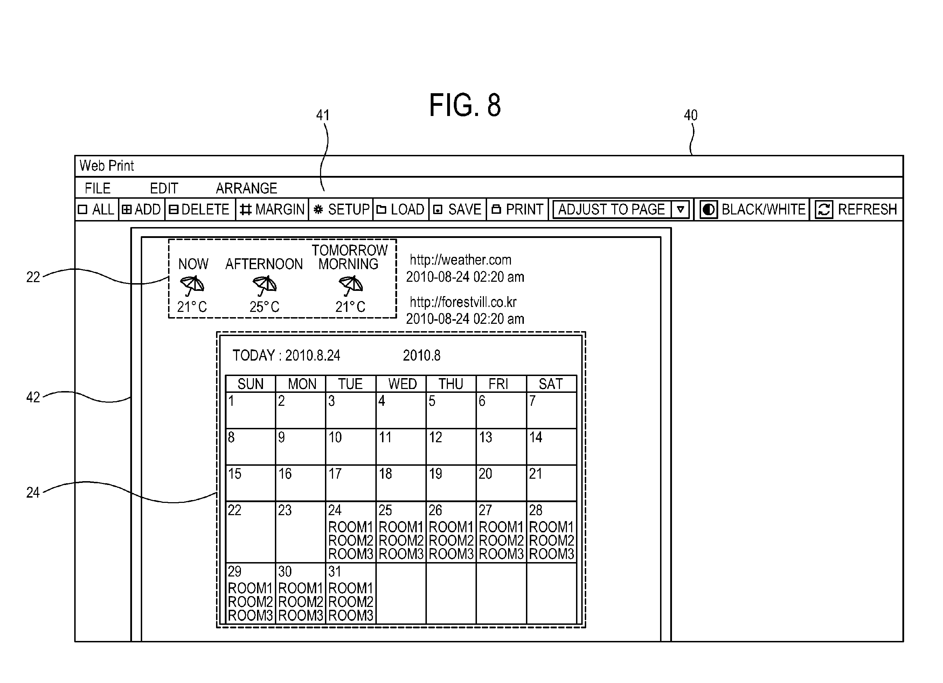

FIGS. 7 and 8 respectively illustrate a screen of a webpage 20 and an entire screen 40 according to another exemplary embodiment.

In the present embodiment with reference to FIGS. 7 and 8, a user may store a plurality of web contents in one web clipped data.

In detail, as shown in FIG. 7, while a first web content 22 with respect to weather is clipped, the user visits a webpage with respect to book a hotel and clips a second content 24 as the same web clipped data. That is, one web clipped data includes both weather data and hotel booking data.

Accordingly, the user conveniently identifies the plurality of contents at once using the one data.

Here, the plurality of contents 22 and 24 included in the one web clipped data may be clipped from the same webpage or from different webpages.

When the contents 22 and 24 are clipped from the different webpages, correlations between the contents are grouped and stored in a relationship file of FIG. 3.

That is, in the present embodiment with reference to FIGS. 7 and 8, when the user needs weather information and information about a booking site to book a hotel at weekend, the correlations are defined and stored in the relationship file of the web clipped data.

Here, the web clipped data may further include contents of a different webpage having no correlation.

For example, as shown in FIG. 7, while the first content 22 and the second content 24 are clipped in a scrap board 30, the user may access a news site and clip contents of breaking news in the same web clipped data.

In this instance, the relationship file may be defined to group only the first content 22 and the second content 24 having a correlation. Here, the user may selectively update only contents grouped from the web clipped data including the plurality of web contents.

Further, only web contents selected by the user may be selectively updated regardless of grouping web contents as necessary.

As shown in FIG. 7, when the user selects a refresh button 45 while the plurality of web contents 22 and 24 included in the web clipped data are selected, the controller 150 controls the communication unit 140 to access each corresponding webpage using each URL of the clipped first web content 22 and the clipped second web content 24 and to collect HTML data from the accessed webpages.

The controller 150 updates a clipped time of the web clipped data to a current time and updates URL information. Here, the update refers to updating a layout file, layout.xml, which may be performed when there is a change in the URL information. A clipped time of each web content may be updated.

The controller 150 parses and stores the HTML data collected through the communication unit 140. Then, the controller 150 compares the parsed HTML data with the layout file, layout.xml, of the pre-stored web clipped data.

Based on a comparison result, the controller 150 analyzes a clipped image updated from the pre-stored web clipped data. Here, the controller 150 may designate the clipped image using coordinates including a starting point of an x coordinate and a y coordinate, a width, and a height.

The controller 150 stores information about the clipped image, analyzed above, as a temporary file in a temporary buffer.

The controller 150 records the stored temporary file in the layout file, layout.xml, to update the web clipped data in the storage unit 130 and controls the display unit 120 to display the updated web clipped data.

Here, the updated web clipped data is displayed along with a URL and a clipped time which are finally updated as shown in FIG. 8. When part of contents is selectively updated, displayed updated times may be different for each other.

Alternatively, when a plurality of web contents are stored in one web clipped data, the plurality of web contents may be simultaneously updated in one screen, only grouped contents may be selectively updated, or part of the contents selected regardless of grouping may be updated.

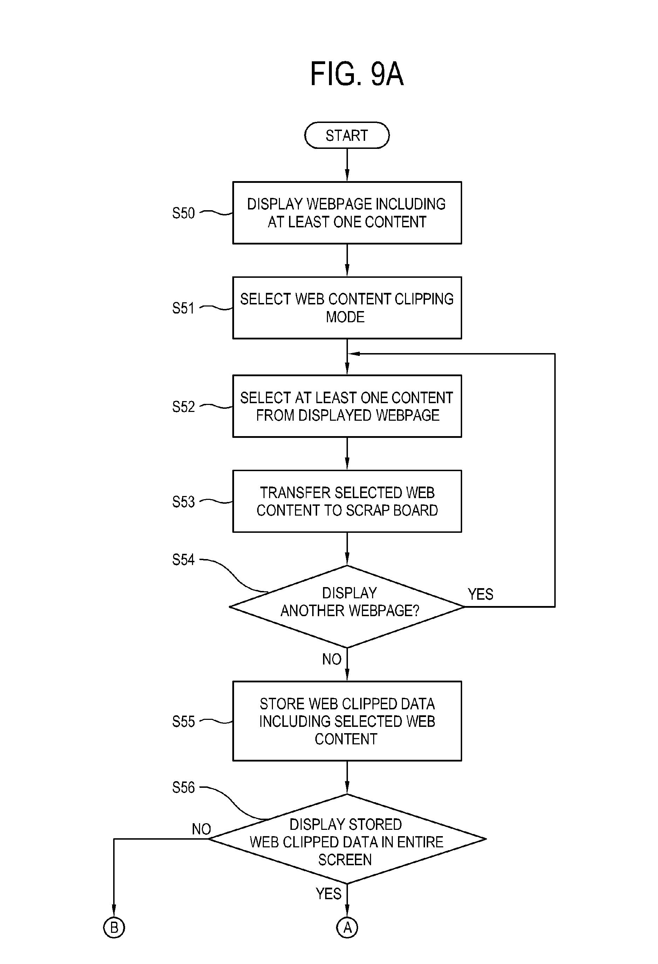

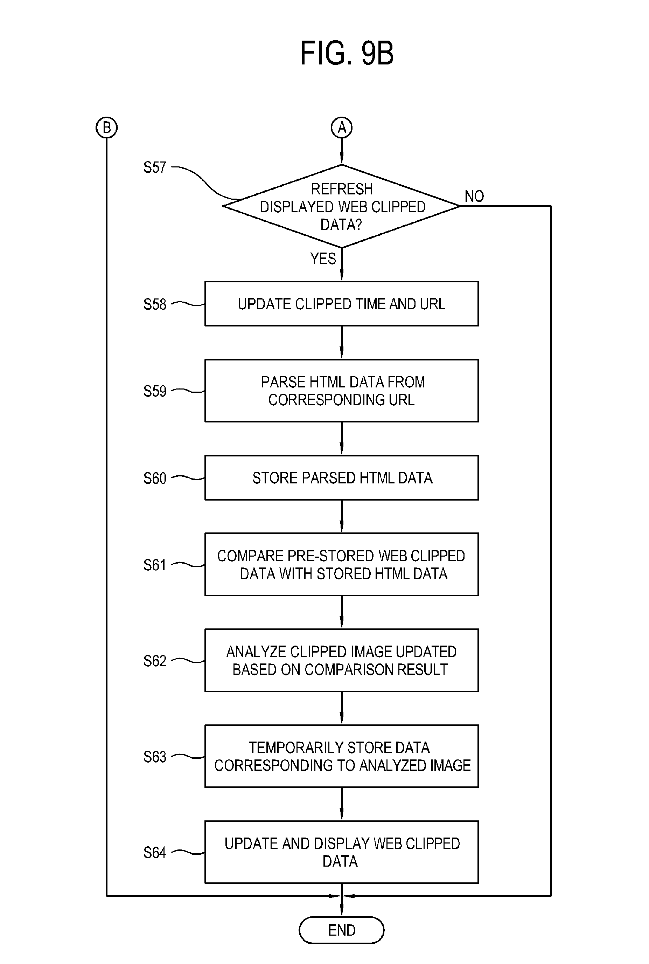

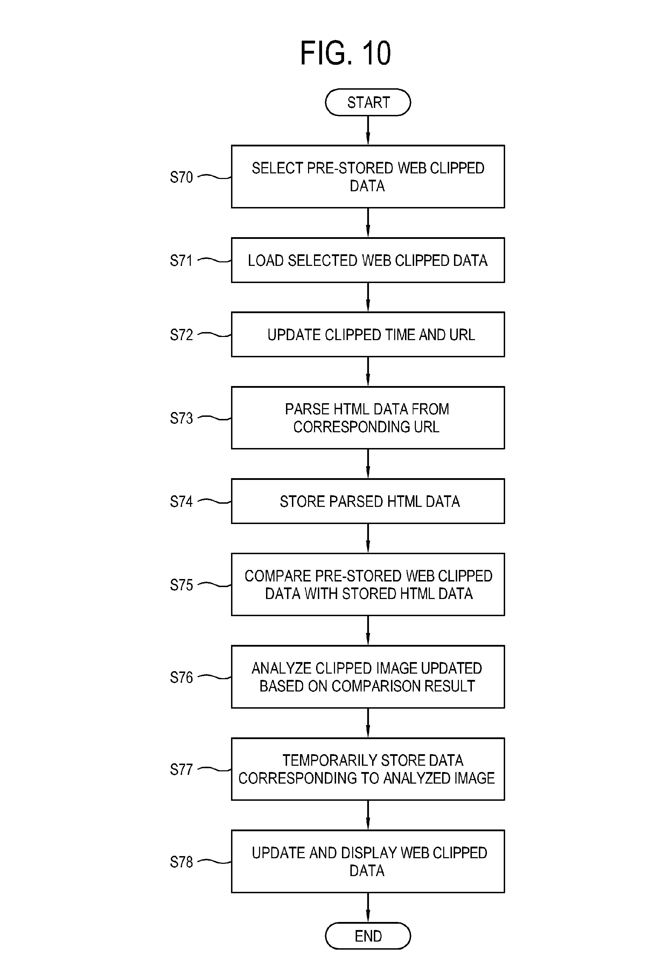

Hereinafter, in the host apparatus having a configuration described above, a method of displaying a web content is described with reference to FIGS. 9A, 9B, and 10.

FIGS. 9A and 9B are a flowchart illustrating the method of displaying the web content by the host apparatus according to an exemplary embodiment.

As shown in FIG. 9A, the display unit 120 of the host apparatus 100 displays a webpage including at least one content (S50).

A user selects a web content clipping mode on the webpage screen 20 of FIG. 2 using the user input unit 110 (S51).

The user selects at least one content in the webpage displayed in operation S50 using the user input unit 110 (S52).

Then, the user transfers the web content selected in operation S52 to the scrap board 30 (S53). Here, the selected web content is clipped and displayed in the scrap board 30, and the display unit 130 may display the web content along with information about the web content, such as a URL, a clipped time, and the like, based on a user's selection.

The user may select whether to visit and display another webpage while the at least one web content is clipped (S54).

As a result of operation S54, when the user selects to display another webpage, the clipping of the web content in operations S52 and S52 are repeatedly performed based on a user's selection.

As a result of operation S54, when the user does not select to display another webpage, the controller 150 stores web clipped data including the content selected and clipped in operations S52 and S53 in the storage unit 130 (S55). Here, the stored web clipped data may be a W2P file having the structure shown in FIG. 3.

The user may select the entire screen button 35 of FIG. 2 with respect to the web clipped data to display the web clipped data stored in operation S55 as the entire screen 40 of FIG. 6 (S56).

When a display of the entire screen is selected in operation S56, the user may select the refresh button 45 or a renew button, an F5 key, from the entire screen 40 of FIG. 6 to refresh the displayed web clipped data, as shown in FIG. 9B in operation S57. Here, when the web clipped data includes a plurality of web contents, the user may selectively update all or part of the contents. Here, selected part of the contents may be contents grouped based on correlations.

In operation S57, when the user selects refreshing the web clipped data, the controller 150 updates a clipped time and a URL of the pre-stored web clipped data corresponding to current information (S58).

Then, the controller 150 accesses a corresponding webpage using a URL of a web content clipped through the communication unit 140, collects HTML data from the accessed webpage, and parses the collected HTML data (S59).

The controller 150 stores the HTML data parsed in operation S59 in a form of a virtual image in the storage unit 130 (S60).

The controller 150 compares a layout file of the pre-stored web clipped data with the HTML data stored in operation S60 (S61).

The controller 150 analyzes a clipped image updated from the pre-stored web clipped data based on a comparison result in operation S61 (S62).

The controller 150 temporarily stores data corresponding to the clipped image analyzed in operation S62 (S63).

The controller 150 records the temporary data stored in operation S63 in the layout file of the web clipped data and controls the display unit 120 to display the web clipped data via updating (S64). Here, the controller 150 controls the display unit 120 to display the web clipped data along with the URL and the clipped time updated in operation S58.

FIG. 10 is a flowchart illustrating a method of displaying a web content by a host apparatus according to another exemplary embodiment.

As shown in FIG. 10, a user may select one of web clipped data pre-stored in the storage unit 130 like operation S55 of FIG. 9A (S70).

The controller 150 loads the selected web clipped data corresponding to the selection in operation S70 (S71).

The controller 150 updates a clipped time and a URL of the pre-stored web clipped data corresponding to current information along with the loading in operation S71 (S72). Here, the controller 150 may perform the update by separately receiving a selection of the refresh button 45 by the user. Further, when the selected data is a web clipped data including a plurality of web contents, the user may selectively update all or part of the contents. Here, selected part of the contents may be contents grouped based on correlations.

The controller 150 accesses a corresponding webpage using a URL of a web content clipped through the communication unit 140, collects HTML data from the accessed webpage, and parses the collected HTML data (S73).

The controller 150 stores the HTML data parsed in operation S73 in a form of a virtual image in the storage unit 130 (S74).

The controller 150 compares a layout file of the pre-stored web clipped data with the HTML data stored in operation S74 (S75).

The controller 150 analyzes a clipped image updated from the pre-stored web clipped data based on a comparison result in operation S75 (S76).

The controller 150 temporarily stores data corresponding to the clipped image analyzed in operation S76 (S77).

The controller 150 records the temporary data stored in operation S77 in the layout file of the web clipped data and controls the display unit 120 to display the web clipped data via updating (S78). Here, the controller 150 controls the display unit 120 to display the web clipped data along with the URL and the clipped time updated in operation S72.

Although a few exemplary embodiments have been shown and described, it will be appreciated by those skilled in the art that changes may be made in these exemplary embodiments without departing from the principles of the invention, the scope of which is defined in the appended claims.

## Claims

1. A method of displaying content by a host apparatus, the method comprising:
executing a browser and displaying a page including at least one content;
selecting a content clipping menu in the browser;
displaying a scrap board in one portion of the browser through a plug-in;
selecting the at least one content from the displayed page;
clipping and displaying the selected content on a scrap board;
storing the clipped content as clipped data in a predetermined format;
displaying the stored clipped data; and
updating the displayed clipped data with data corresponding to a current uniform resource locator (URL).

2. The method of claim 1, wherein the displaying the clipped data comprises displaying the URL and a clipped time of the clipped content, and the updating the clipped data may comprise updating the URL and the clipped time of the clipped content.

3. The method of claim 1 or claim 2, wherein the updating clipped data comprises:
accessing a corresponding page using the URL of the clipped content; and
parsing hypertext markup language (HTML) data collected from the accessed page, and may further comprise:
storing the parsed data as a virtual image;
comparing the stored virtual image with the stored clipped data; and
analyzing a clipped image updated from the stored clipped data based on a comparison result.

4. The method of claim 1 or claim 2, wherein the updating the clipped data comprises:
selecting at least one content to update among the clipped content; and
updating the selected content.

5. The method any one of the preceding claims, wherein the storing as the clipped data stores clipped data in a compressed web to print (W2P) format file,
wherein the W2P file comprises a file to manage at least one of information including a coordinate, a width, a height, a scale, a state, the URL, a title of an original webpage, and a clipped time of a clipped region from the page.

6. The method of claim 1 or claim 2, wherein the updating the clipped data comprises:
selecting a refresh of the stored clipped data;
loading the stored clipped data; and
updating the loaded clipped data.

7. The method of any one of the preceding claims, wherein content is a web content, the page is a web page, and the browser is a web browser.

8. A host apparatus comprising:
a communication unit for performing data communication;
a display unit arranged to display a page including at least one content in one portion of the browser through a plug-in according to execution of a browser;
a user input unit arranged to execute the browser, select a content clipping menu in the browser, select the at least one content from the displayed page and clip the selected content on a scrap board displayed in one portion of the page;
a storage unit arranged to store the clipped content as clipped data in a predetermined format; and
a controller arranged to control the display unit to display the stored clipped data, and to control the communication unit to update the stored clipped data with data corresponding to a current uniform resource locator (URL) when a selection to refresh the stored clipped data is input through the user input unit.

9. The host apparatus of claim 8, wherein the display unit is arranged to further display the URL and a clipped time of the clipped content, wherein the controller is arranged to further update the URL and the clipped time of the clipped content.

10. The host apparatus of claim 8 or claim 9, wherein the controller is arranged to control the communication unit to access a corresponding page using the URL of the clipped content, and to parse hypertext markup language (HTML) data collected from the accessed page to update the clipped data.

11. The host apparatus of claim 10, wherein the controller is arranged to store the accessed page in the storage unit as temporary data based on the parsed data, compare the stored temporary data with the stored clipped data, and analyze a clipped image updated from the storage clipped data based on a comparison result.

12. The host apparatus of claim 8 or claim 9, wherein the user input unit is arranged to select at least one content to update among the clipped content, and the controller is arranged to update the selected content.

13. The host apparatus of claim 8 or claim 9, wherein the storage unit is arranged to store the clipped data in a compressed web to print (W2P) format file, wherein the W2P file comprises a file to manage at least one of information including a coordinate, a width, a height, a scale, a state, the URL, a title of an original page, and a clipped time of a clipped region from the page.

14. The host apparatus of claim 8 or claim 9, wherein the controller is arranged to load the clipped data from the storage unit corresponding to a selection to refresh the clipped data, and to update the loaded clipped data.

15. The host apparatus of any one of claims 8 to 14, wherein the content is a web content, the page is a web page, and the browser is a web browser.
